# EUROPEAN PATENT SPECIFICATION

(11) **EP 3 041 298 B1**
(45) Date of publication and mention of the grant of the patent: **28.06.2017**
(21) Application number: 14839819.1
(22) Date of filing: 20.08.2014
(51) Int. Cl.: H04W 52/24, H04W 16/32, H04W 84/10, H04W 52/40, H04W 52/28

(54) **WIRELESS BASE-STATION DEVICE AND TRANSMISSION-POWER-LEVEL DETERMINATION METHOD**
DRAHTLOSE BASISSTATIONSVORRICHTUNG UND VERFAHREN ZUR BESTIMMUNG DES SENDELEISTUNGSNIVEAUS
DISPOSITIF DE STATION DE BASE SANS FIL ET PROCÉDÉ DE DÉTERMINATION DE NIVEAU DE PUISSANCE D'ÉMISSION

(30) Priority: 27.08.2013 JP 2013176016
(43) Date of publication of application: 06.07.2016
(73) Proprietor: NTT DOCOMO, INC., Chiyoda-ku Tokyo 100-6150 (JP)
(72) Inventor: FUKUDA, Atsushi, Tokyo 100-6150 (JP); SOMEYA, Takao, Tokyo 100-6150 (JP)
(74) Representative: Hoffmann Eitle
(86) International application number: PCT/JP2014/071731
(87) International publication number: WO 2015/029849

(56) References cited:
- EP-A1- 2 352 344
- WO-A1-2010/061628
- WO-A1-2012/058047
- JP-A- 2001 169 338
- US-A1- 2012 108 249
- US-A1- 2013 115 999

## Description

### TECHNICAL FIELD

The present invention relates to a base station apparatus in a mobile communication system. More particularly, the present invention relates to a technique for determining a transmission power in the base station apparatus.

WO 2012/058047 A1 discloses a method and an apparatus to manage interference in a multi-cellular network. The document suggests using downlink power control to allow a serving femto access point of a plurality of femto access points to transmit signals at a first power level to ensure a quality of service level of a service provided to a first plurality of mobile stations served by the plurality of femto access points.

EP 2 352 344 A1 discloses a wireless communication base station and a total transmission power regulating method that reduce interference to macrocell users near a femtocell and interference to neighbouring femtocell users near the femtocell in a balanced manner, while ensuring throughput of the femtocell users.

### BACKGROUND ART

There is a case in which a femto base station apparatus is placed in a macro cell in order to improve radio quality in a narrow area such as in a home and the like, or to distribute traffic of the macro cell.

In femto base station apparatuses, there is a type of femto base station apparatus which is provided with a function of radio plug and play (radio PnP) in which the femto base station apparatus monitors surrounding radio wave environment and automatically sets radio related parameters for realizing an easy setup method.

According to the radio PnP function, for example, only by turning on the femto base station apparatus, the femto base station apparatus automatically sets and adjusts various parameters, related to radio, depending on placement situation and the like. Thus, it becomes unnecessary to perform radio wave measurement and to set various parameters based on the radio wave measurement results that were necessary in the conventional technique. Thus, operation can be started more easily.

### RELATED ART DOCUMENT

### [PATENT DOCUMENT]

[PATENT DOCUMENT 1] JP2011-024195

### SUMMARY OF THE INVENTION

### PROBLEM TO BE SOLVED BY THE INVENTION

As the above-mentioned radio PnP functions, there is a function for determining whether a signal is transmitted from any of neighbor macro base station apparatuses so as to detect an identifying parameter and to make settings which are different from those of the neighbor macro base station apparatuses, and there is a function for measuring radio wave strength (interference) from a neighbor macro base station apparatus so as to set transmission power of the femto base station apparatus from the interference amount, and the like.

Currently, as a communication scheme of the mobile communication, in addition to the legacy 3G, LTE is widespread. Thus, femto base station apparatuses supporting both of 3G and LTE are appearing.

The bandwidth of the transmission band that can be used for radio communication of LTE is wider than that of the transmission band used for radio communication of 3G. Also, as for LTE, there is a case in which the bandwidth of the transmission band is different for each cell. That is, as to a femto base station apparatus supporting LTE, a case occurs in which there are one or a plurality of neighbor cells operated using a transmission band having a bandwidth narrower than that of a transmission band of itself.

In such a case, it is considered that an interference amount from a neighbor cell is different for each part of the transmission band of the femto base station apparatus. Thus, for example, it is difficult to obtain proper transmission power for causing a mobile terminal to be located in a cell of the femto base station apparatus based on an average interference amount over the transmission band of the femto base station apparatus.

Also, in a case where a transmission power of the femto base station apparatus is determined without considering an arrival direction of a radio wave (to be referred to as interference wave) from a neighbor cell, there is a problem in that there is a possibility that an interference amount exerted on a neighbor cell existing in a direction other than the arrival direction of the interference wave increases.

In the above-mentioned cellular environment, there has been no conventional radio PnP technique for automatically determining proper transmission power by considering the arrival direction of the interference radio wave.

The present invention is contrived in view of the above-mentioned points, and an object of the present invention is to provide a technique that enables a radio base station apparatus to properly determine a transmission power by considering an arrival direction of interference wave.

### MEANS FOR SOLVING THE PROBLEM

For solving the problem, according to an embodiment of the present invention, there is provided a radio base station apparatus including a function for determining a transmission power, including:
a neighbor cell detection unit configured to detect a neighbor cell that interferes with a target cell that the radio base station apparatus can form;
a received power measurement unit configured to measure a received power from the neighbor cell;
an interference wave arrival direction estimation unit configured to estimate an arrival direction of interference wave from the neighbor cell; and
a transmission power determination unit configured to weight the received power based on the arrival direction of the interference wave and a desired area direction, to determine an interference amount in the target cell based on a sum of weighted received powers, and to determine a transmission power using the interference amount.

Also, according to an embodiment of the present invention, there is provided a transmission power determination method executed by a radio base station apparatus including a function for determining a transmission power, including:
a neighbor cell detection step of detecting a neighbor cell that becomes interference to a target cell that the radio base station apparatus can form;
a received power measurement step of measuring a received power from the neighbor cell;
an interference wave arrival direction estimation step of estimating an arrival direction of interference wave from the neighbor cell; and
a transmission power determination step of weighting the received power based on the arrival direction of the interference wave and a desired area direction, determining an interference amount in the target cell based on a sum of weighted received powers, and determining a transmission power using the interference amount.

### EFFECT OF THE PRESENT INVENTION

According to an embodiment of the present invention, it becomes possible to provide a technique that enables a radio base station apparatus to properly determine a transmission power by considering an arrival direction of interference wave.

### BRIEF DESCRIPTION OF THE DRAWINGS

Fig. 1 is a diagram showing a whole configuration example of a mobile communication system in an embodiment of the present invention;
Fig. 2 is a diagram showing a state of radio wave in an environment shown in Fig. 1;
Fig. 3 is a diagram showing an outline example of transmission power determination processes performed by the small base station apparatus 100;
Fig. 4 is a diagram for explaining an operation outline example when considering an interference wave arrival direction;
Fig. 5 is a diagram for explaining an operation outline example when considering an interference wave arrival direction;
Fig. 6 is a functional block diagram of the small base station apparatus 100;
Fig. 7 is a flowchart showing a procedure example on transmission power setting of the small base station apparatus 100;
Fig. 8 is a diagram showing an example of measurement points in detection of a neighbor cell;
Fig. 9 is a diagram showing another example of a neighbor cell radio wave environment;
Fig. 10 is a diagram showing an example of a cellular environment for explaining an example of a weighting method for interference power;
Fig. 11 is a diagram showing a size of interference power in the cellular environment shown in Fig. 10;
Fig. 12 is a diagram for explaining an example of a weighting method for interference power.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below.

For example, although a case where there are 3G and LTE as communication schemes is explained as an example in the following embodiment, the communication scheme is not limited to these. Also, although it is assumed that the small base station apparatus 100 described in the following embodiment is a femto base station apparatus including a radio PnP function, the small base station apparatus 100 is not limited to such a femto base station apparatus. Also, although the small base station apparatus 100 is an example of a radio base station apparatus of the present invention, application of the transmission power determination technique of the radio base station apparatus of the present invention is not limited to the small base station apparatus. For example, the technique can be also applied to other types of base station apparatuses (macro base station and the like).

Also, in the following example, although macro cells are explained as an example of a neighbor cell, the neighbor cell may be a femto cell of another small base station apparatus and the like.

### (System whole configuration example)

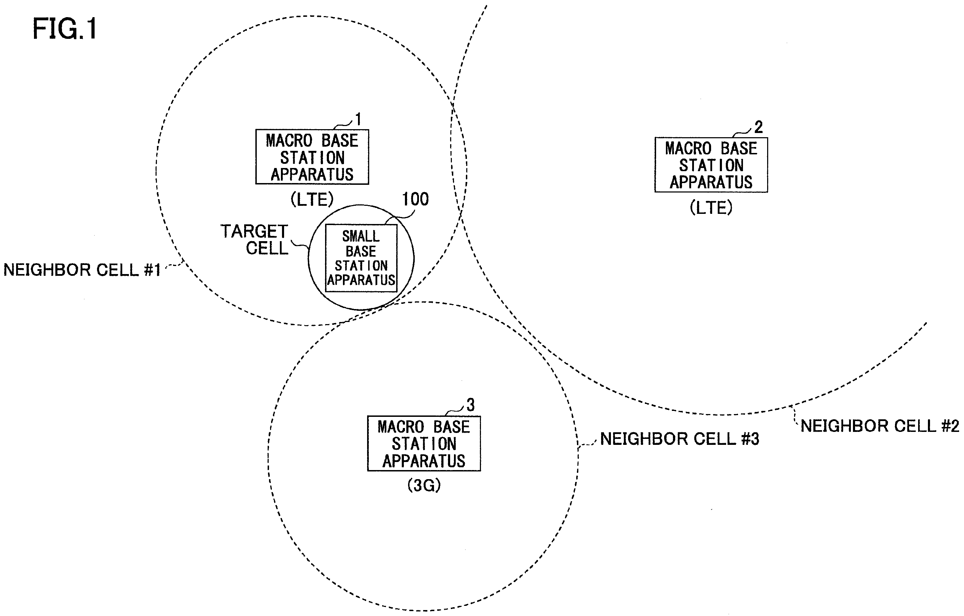

Fig. 1 shows a whole configuration example of a mobile communication system of the present embodiment. As shown in Fig. 1, in the mobile communication system, the small base station apparatus 100 of the present embodiment is placed in an environment in which there are macro base station apparatuses 1, 2 and 3 around the small base station apparatus 100. In the example shown in Fig. 1, cells formed by the macro base station apparatuses 1, 2 and 3 are shown by dotted lines, the cell (to be referred to as "target cell" hereinafter) formed by the small base station apparatus 100 of the present embodiment is shown by a solid line. As shown in Fig. 1, for the small base station apparatus 100, the macro base station apparatus 1 forms a neighbor cell #1, the macro base station apparatus 2 forms a neighbor cell #2, and the macro base station apparatus 3 forms a neighbor cell #3.

Also, the small base station apparatus 100 is connected to a core network of a mobile communication network by a communication circuit (example: broadband circuit). Further, the small base station apparatus 100 can obtain position information and the like from another base station apparatus via the core network or by direct communication between base stations (example: communication via X2 interface). When performing arrival direction estimation using received radio wave, it is not necessary to have a function for obtaining position information of another base station apparatus.

As shown in Fig. 1, the macro base station apparatus 1 supports LTE, the macro base station apparatus 2 supports LTE, and the macro base station apparatus 3 supports 3G. Although the small base station apparatus 100 supports both of 3G and LTE, it is not essential to support both of 3G and LTE in the embodiment of the present invention, and the small base station apparatus 100 may be an apparatus that supports only LTE. The embodiment of the present invention is mainly related to transmission power setting in LTE side of the small base station 100. However, it is possible to perform transmission power setting in 3G side by using the technique of the present invention. Also, application target of the present invention is not limited to a particular communication scheme.

The transmission frequency bandwidth (transmission frequency bandwidth is to be referred to as "bandwidth" hereinafter, this may be described as "system bandwidth") used in a base station apparatus of 3G is narrower than a bandwidth used in LTE. In the example shown in Fig. 1, the macro base station apparatus 1 uses 10MHz of LTE, the macro base station apparatus 2 uses 15MHz of LTE, and the macro base station apparatus 3 uses 5MHz of 3G. The bandwidth of LTE of the small base station apparatus 100 is 15MHz.

### (Transmission power setting operation outline example)

In the present embodiment, the operating band of the small base station apparatus 100 is divided according to operating bandwidth of each neighbor cell, arriving directions of radio waves (interference waves) from neighbor cells are estimated, interference power from each neighbor cell is weighted for each divided bandwidth based on the arrival directions and a desired area direction, and the weighted interference powers are added, so that an interference amount is obtained, transmission power is determined, and the transmission power of the small base station apparatus 100 is set.

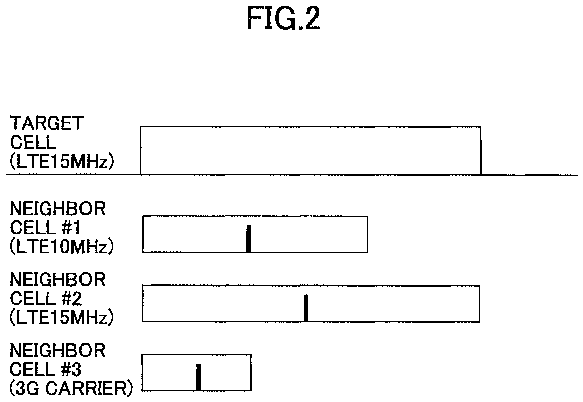

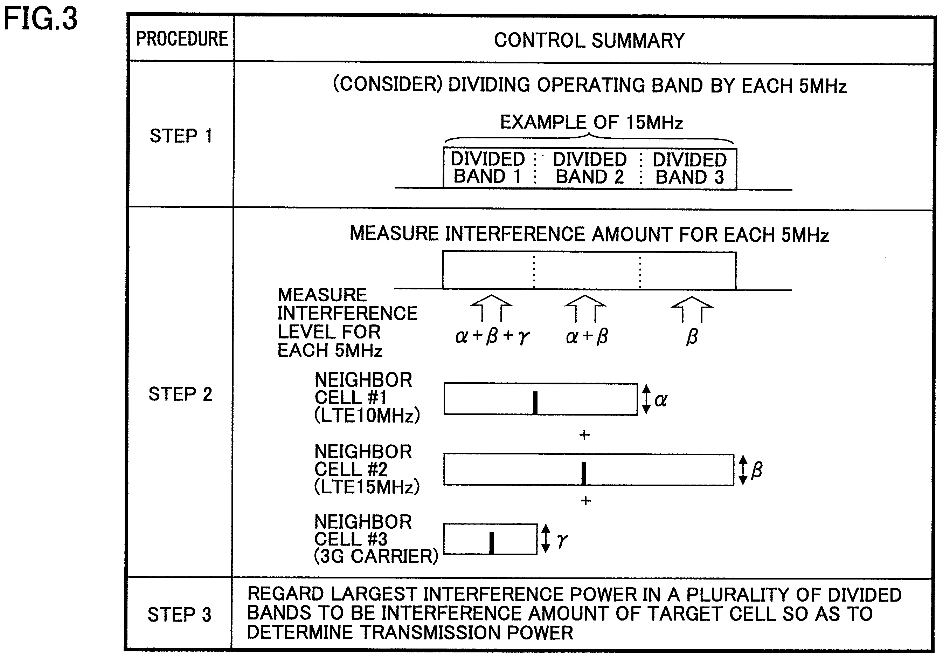

In the following, first, a basic technique is described with reference to Fig. 2 and Fig. 3, in which the operating band of the small base station apparatus 100 is divided according to the operating bandwidth of each neighbor cell, and interference powers from each neighbor cells are added for each divided band to determine a transmission power. After that, transmission power determination considering arrival direction is described. Operation of transmission power determination/setting of the present embodiment is performed, for example, after the small base station apparatus 100 is turned on, or it is performed periodically and automatically in operation.

By the way, the example for setting a transmission power without considering the arrival direction described first with reference to Figs. 2 and 3 is also an embodiment of the present invention in a case where all directions are desired area directions.

### <Basic technique>

In the present embodiment, since the small base station apparatus 100 is placed in an environment shown in Fig. 1, bands (transmission bands) of radio wave of neighbor cells for the small base station apparatus 100 are as shown in Fig. 2. Fig. 2 also shows a band of the small base station apparatus 100.

Based on the premise shown in Fig. 2, first, the small base station apparatus 100 performs cell search so as to detect a communication scheme and a band for each neighbor cell (neighbor base station) shown in Fig. 2.

In the present example, as shown in Fig. 2, bands of each neighbor cell and the target cell align at the left end of the frequency position, and each bandwidth is a multiple of 5MHz of 3G which is the smallest bandwidth. Thus, as shown in Fig. 3, the small base station apparatus 100 considers to divide the band of itself every 5MHz (step 1), and calculates an interference power (interference amount) for each divided band (step 2). More specifically, the small base station apparatus 100 measures received power for each neighbor cell, adds received powers for each overlapping band part, and sets the result to be an interference power for each band. In the present embodiment, basically, it is assumed that a transmission power of a base station is constant over the whole transmission band.

In the example shown in Fig. 3, the received power from the neighbor cell #1 (macro base station apparatus 1) is α, the received power from the neighbor cell #2 (macro base station apparatus 2) is β, and the received power from the neighbor cell #3 (macro base station apparatus 3) is γ. In the divided band 1, bands of neighbor cells #1-#3 overlap with the band of the small base station apparatus 100, in the divided band 2, bands of neighbor cells #1 and #2 overlap with the band of the small base station apparatus 100, and in the divided band 3, only band of neighbor cell #3 overlaps with the band of the small base station apparatus 100. Therefore, as shown in Fig. 3, the interference power of the divided band 1 (sum of received powers from neighbor cells) becomes α+β+γ, the interference power of the divided band 2 becomes α+β, and the interference power of the divided band 3 becomes γ.

After obtaining the interference power for each divided band, the small base station apparatus 100 regards the greatest value in the interference powers of the plurality of divided bands to be the interference power (interference amount) of the target cell of the small base station apparatus 100, and determines a transmission power of itself based on the interference power (step 3). It is an existing technique itself to determine a transmission power of a base station apparatus for obtaining an area of a predetermined received power and a predetermined size in a state where interference of a size of interference power is received.

In the example of the radio wave environment shown in Fig. 2, since α+β+γ is the largest, for example, the transmission power is calculated as "transmission power"=α+β+γ+"offset value". The offset value is a value determined based on a size of the cell to be desired to form, a desired reception quality and the like, for example.

Basically, the mobile terminal performs operation for determining a cell to be located in based on a size of a received power of radio wave from the base station apparatus. Thus, as mentioned above, by regarding the largest value in the interference powers of the plurality of divided bands to be the interference power for the target cell so as to determine the transmission power of itself based on the interference power, it becomes possible to cause a mobile terminal whose interference amount from neighbor cells is the largest to be located in a target cell of a desired size. Thus, the target cell can be properly formed.

### <Weighting in consideration of interference wave arrival direction>

In the above-mentioned basic technique, although proper transmission power can be obtained for an area of a direction in which interference power becomes the largest from the viewpoint of the small base station apparatus 100, there is a possibility in that transmission power is not proper for an area of the other directions so that interference power exerted on neighbor cells becomes too large.

Thus, in the present embodiment, the small base station apparatus 100 estimates an arrival direction of an interference wave from each neighbor cell so as to weight and add interference powers based on the arrival direction and a desired area direction.

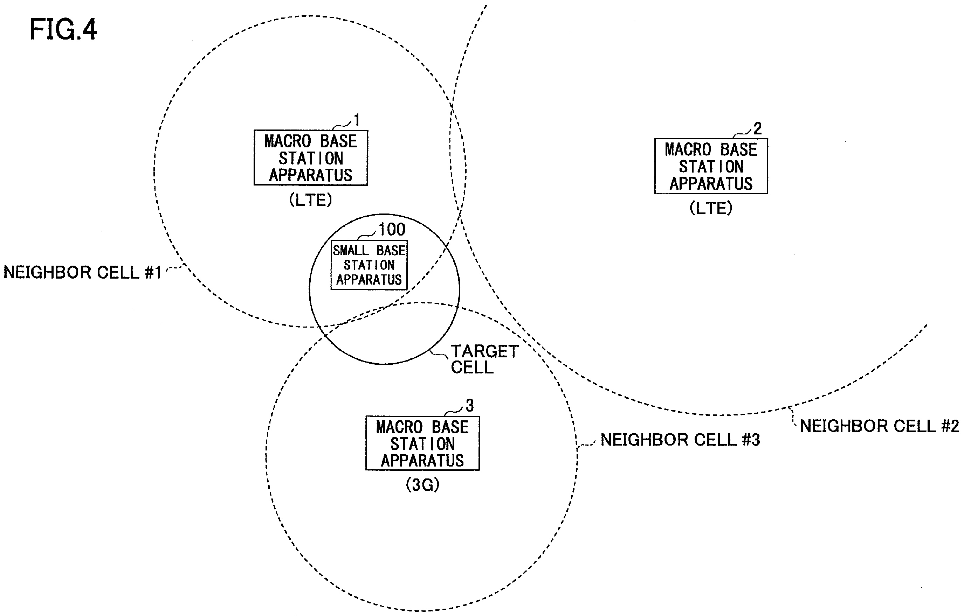

For example, in the example of the environment shown in Fig. 1, as shown in Fig. 4, a case is assumed in which the desired area direction is a direction toward the macro base station apparatus 3 of the neighbor cell #3, and areas of other directions are not necessary for the small base station apparatus 100.

The small base station apparatus 100 estimates an arrival direction of interference wave from each neighbor cell, and ascertains that each interference wave arrives in a direction toward the small base station apparatus 100 from each macro base station apparatus shown in Fig. 4. That is, the arrival direction of radio wave of the interference power α is a direction from the macro base station apparatus 1 to the small base station apparatus 100, the arrival direction of radio wave of the interference power β is a direction from the macro base station apparatus 2 to the small base station apparatus 100, and the arrival direction of radio wave of the interference power γ is a direction from the macro base station apparatus 3 to the small base station apparatus 100. By the way, in an actual situation, although it is not always true that the radio wave arrives from a position at which there is the base station of the radio wave origination source, the above-mentioned arrival direction is used in this outline explanation in order to make the explanation easy to understand.

In the example of Fig. 4, since the desired area direction is a direction toward the macro base station apparatus 3, in the adding process shown in step 2 of Fig. 3, the small base station apparatus 100 weighs interference powers and adds weighted interference powers such that effects of interference powers α and β other than the interference power γ from the macro base station apparatus 3 become small.

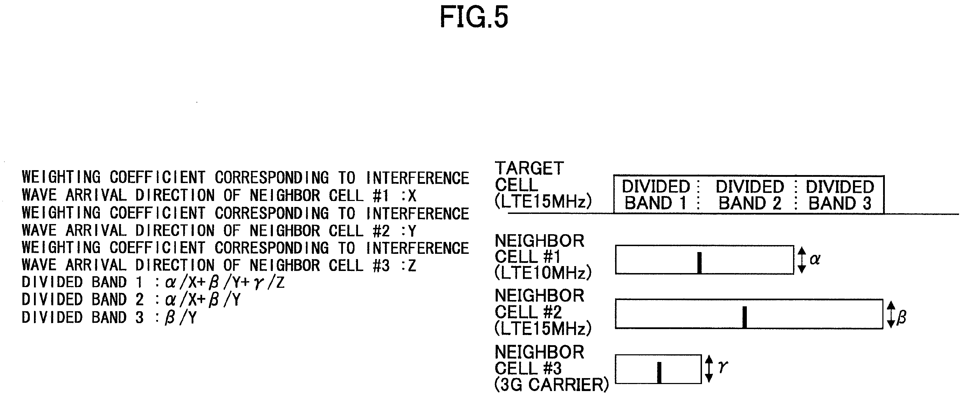

For example, as shown in Fig. 5, for the divided band 1, the sum is calculated by a formula of α/X+β/Y+γ/Z, for the divided band 2, the sum is calculated by a formula of α/X+β/Y, and for the divided band 3, the sum is calculated by a formula of β/Y, where Z=1, X>1 and Y>1.

Then, the largest value α/X+β/Y+γ/Z in the divided bands 1-3 is regarded as an interference amount so that the transmission power is set. The value (α/X+β/Y+γ/Z) obtained by weighting in consideration of interference wave arrival directions in the above-mentioned method becomes smaller than the value (α+β+γ) in a case where the interference wave arrival directions are not considered, but becomes larger than the interference power γ (weight 1) corresponding to the direction of the desired area. Thus, it can be considered that transmission power which does not lose to the interference power γ can be set. Thus, in a case where weighting is performed based on the arrival directions and the desired area direction, it becomes possible to set an area to the desired area direction by reducing interference to other directions (directions in which an area of the small base station apparatus 100 is not necessary).

### (Detailed description of embodiment)

In the following, the present embodiment is described in more detail.

### <Apparatus configuration>

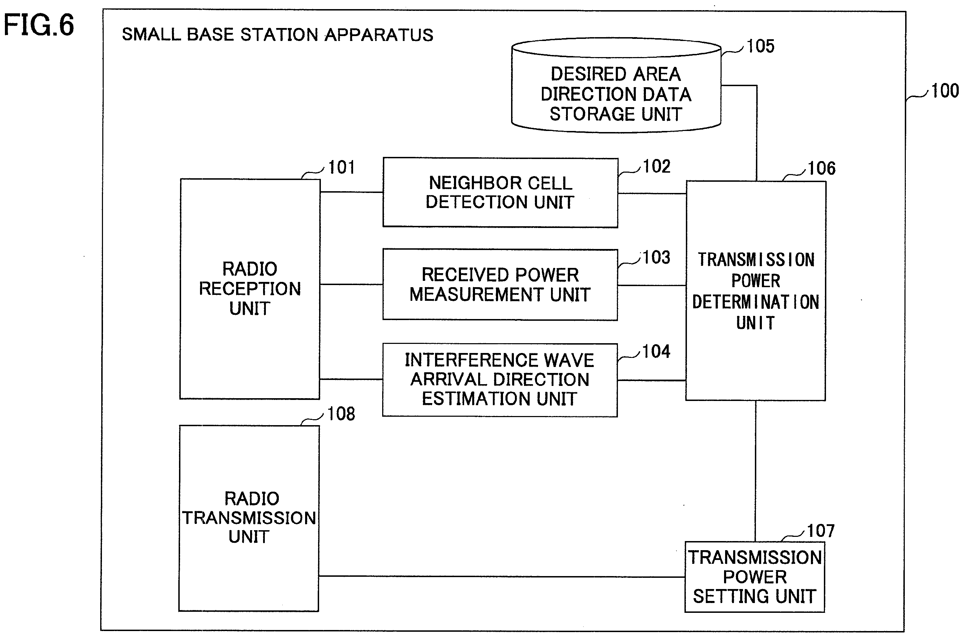

Fig. 6 shows a functional block diagram of the small base station apparatus 100 in the present embodiment. As shown in Fig. 6, the small base station apparatus 100 includes a radio reception unit 101, a neighbor cell detection unit 102, a received power measurement unit 103, an interference wave arrival direction estimation unit 104, a desired area direction data storage unit 105, a transmission power determination unit 106, a transmission power setting unit 107 and a radio transmission unit 108. The configuration of Fig. 6 shows only configurations that are related to automatic transmission power setting using the technique of the present invention in the small base station apparatus 100. The small base station apparatus 100 includes existing functions, not shown in the figure, for operating as a base station apparatus.

The radio reception unit 101 is a functional unit configured to receive a radio signal (radio wave). The radio transmission unit 108 is a functional unit configured to transmit a radio signal. The radio reception unit 101 may be provided with a plurality of antennas (such as array antenna) for enabling the interference wave arrival direction estimation unit 104 to perform interference wave arrival direction estimation.

The small base station apparatus 100 of the present embodiment supports a plurality of communication schemes (3G and LTE and the like), and the radio reception unit 101 has a reception function for each communication scheme so that it can perform after-mentioned cell detection, interference wave arrival direction estimation, received power measurement and the like for each communication scheme. Also, the radio transmission unit 108 includes a transmission function for each communication scheme. In the present embodiment, although 3G and LTE are assumed for the plurality of radio communication schemes, the communication schemes are not limited to these.

The neighbor cell detection unit 102 is a functional unit configured to perform cell search for each communication scheme, to detect a neighbor cell, and to detect a band (center frequency and bandwidth, and the like) used in downlink communication in the neighbor cell.

The received power measurement unit 103 measures (calculates) a received power for each neighbor cell detected by the neighbor cell detection unit 102 based on a reference signal or a pilot signal or the like received from the neighbor cell by the radio reception unit 101. As examples of received powers measured by the received power measurement unit 103, there are RSRP, CPICH, RSCP and the like.

The interference wave arrival direction estimation unit 104 estimates, for each neighbor cell, an arrival direction of radio wave (interference wave) that is transmitted from the neighbor cell and that is received by the small base station apparatus 100, based on a reference signal or a pilot signal or the like received from the neighbor cell. By the way, the technique of estimating an arrival direction of radio wave itself is an existing technique.

The desired area direction data storage unit 105 stores data indicating desired area direction. In the present embodiment, the desired area direction data is an angle in a predetermined rotation direction with respect to a predetermined reference direction. However, representation of the direction is not limited to this. The desired area direction data may be set by a user to the small base station apparatus 100, or may be obtained from the outside (example: core network) so as to set the obtained information. Also, for example, a desired area direction may be predetermined as a direction of a predetermined surface of the case of the small base station apparatus 100, and the desired area direction may be stored in the desired area direction data storage unit 105 beforehand. In this case, the user places the small base station apparatus 100 such that the predetermined surface of the case of the small base station apparatus 100 is directed toward the desired area direction.

The transmission power determination unit 106 is a functional unit configured to determine transmission power based on the received power (interference power) for each neighbor cell obtained by the received power measurement unit 103, the interference wave arrival direction for each neighbor cell obtained by the interference wave arrival direction estimation unit 104, and the desired area direction stored in the desired area direction data storage unit 105.

Also, the transmission power determination unit 106 includes a function configured to cause the neighbor cell detection unit 102, the received power measurement unit 103 and the interference wave arrival direction estimation unit 104 and the like to perform operation. The transmission power setting unit 107 is a functional unit configured to set the transmission power determined by the transmission power determination unit 106 in the radio transmission unit 108. The radio transmission unit 108 performs transmission of a radio signal by the set transmission power.

In the present embodiment, the transmission power determination unit 106 determines and sets a transmission power on LTE. As for 3G, a transmission power is determined and set by an existing technique. However, also as to 3G, in a case where, for example, there is a neighbor cell using a bandwidth narrower than that of 3G, the transmission power setting technique described in the present embodiment can be used.

### <Process operation example>

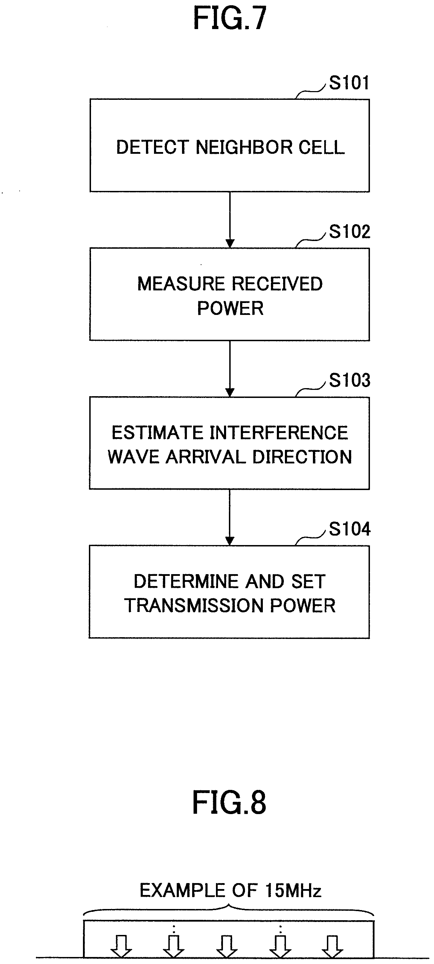

A process operation example of the system is described along the procedure of the flowchart of Fig. 7.

### [Step 101: neighbor cell detection]

After the small base station apparatus 100 is connected to a predetermined communication circuit (example: broadband circuit), and the power is turned on, the neighbor cell detection unit 102 performs cell search (detection of cell). Cell search is performed for each of communication schemes. In both of the communication schemes (3G, LTE) assumed in the present embodiment, the neighbor cell detection unit 102 performs processes of receiving a synchronization signal, and receiving necessary information (bandwidth and the like in LTE) for performing communication in the cell after establishing frame synchronization and the like. Especially, in LTE, since the synchronization signal is transmitted in a band (frequency) of a center part of the system bandwidth, the neighbor cell detection unit 102 performs search (detection of synchronization signal) by measuring a band that may correspond to the band of the center part. Also in 3G, the neighbor cell detection unit 102 performs search in the same way as LTE in that it measures a band where a synchronization signal may be transmitted.

In the present embodiment, the environment shown in Figs. 1 and 2 is used as a premise, thus, the bandwidth of the small base station apparatus 100 is 15MHz, and the smallest bandwidth of the neighbor cell is 5MHz. Then, it is assumed that frequency points (to be referred to as measurement points) where there can be a center of a band of a neighbor cell that overlaps, at least partially, with the transmission band of the small base station apparatus 100 are known beforehand to be 5 points arranged at intervals of 2.5 MHz as shown in Fig. 8. That is, the information of the points is stored beforehand in a storage unit of the neighbor cell detection unit 102. The information of the points may be obtained from the outside (example: core network), and the obtained information may be utilized.

In this case, for each of the 5 points shown in Fig. 8, detection of synchronization signal is performed in a predetermined band centered on the frequency of the point, so that detection of neighbor cell is performed. The detection process is performed for each communication scheme. However, for example, in a case where it is known that a synchronization signal is detected only in a band of a particular point if there is a neighbor cell of a communication scheme (example:3G), it is only necessary to perform detection only for the point as for the communication scheme.

Basically, neighbor cell detection is performed for a plurality of points for each communication scheme. However, for the sake of the explanation to be easily understood, the measurement point for 3G is fixed, and search for a plurality of points is performed for LTE in the present embodiment.

As neighbor cells, in a case where there is a possibility that there are not only neighbor cells of bandwidths of natural number times of 5MHz as shown in Fig. 2, but also neighbor cells of bandwidth of 1.4 MHz of LTE, for example, the number of points where there may be a center of a band of a neighbor cell that overlaps the transmission band of itself becomes very large.

In such a case, although it can be considered to increase the number of measurement points, it is not preferable as a radio PnP function since measurement time increases. As the radio PnP function, it is desirable that operation starts as quickly as possible when the power of the apparatus is turned on. Therefore, in the present embodiment, the number of measurement points can be restricted as explained below as examples (1) - (5). That is, it is possible to perform search by using a number of measurements points less than an assumed number of measurement points. The following restriction of the number of measurement points may be also performed in the case shown in Fig. 8. Also, two or three or four or five of the following examples (1)-(5) may be combined and carried out.
(1) A threshold of the number of measurement points is provided, the threshold is stored in a storage unit of the neighbor cell detection unit 102. The neighbor cell detection unit 102 performs detection of a synchronization signal of measurement points at wide intervals first, then, performs detection by gradually narrowing the interval. The threshold of the number of measurement points may be obtained from the outside (example: core network), and the obtained threshold may be utilized. The neighbor cell detection unit 102 counts the number of measured points, and ends measurement when the number of measured points reaches the threshold.
   As an example, the threshold is greater than 5, and in the example shown in Fig. 8, measurement is performed for 5 points shown in Fig. 8, first. Next, for example, as for measurement points when existence of a neighbor cell of 1.4MHz bandwidth of LTE is assumed, measurement is performed over the whole 15MHz at interval B that is greater than 0.7MHz (such that the number of points does not become large). Next, measurement is performed at interval less than B. Such a process is performed within a range where the number of measured points does not exceed the threshold.
(2) A threshold may be provided for a number of detected neighbor cells. In general, the number of neighbor cells that actually become interference for the cell that is formed by the small base station apparatus 100 is not large. Therefore, in this example, a threshold of the number of detected neighbor cells is predetermined, and the threshold is set in the storage unit of the neighbor cell detection unit 102. The neighbor cell detection unit 102 ends the neighbor cell detection process at a time point when neighbor cells of the number of the threshold are detected.
(3) A threshold may be provided for an interference amount of neighbor cell. When the small base station apparatus 100 is a femto base station apparatus which is assumed in the present embodiment, it is generally placed within a macro cell. Then, it can be considered that interference from the macro cell becomes a dominant interference amount for the small base station apparatus 100, and effects of other neighbor cells as interference are small. Therefore, in this example, the neighbor cell detection unit 102 ends neighbor cell detection when it detects a neighbor cell for which received power that is equal to or greater than a predetermined value, that is predetermined as a value corresponding to an interference amount from the macro cell, is measured. In this example, each time when the neighbor cell detection unit 102 detects a neighbor cell, the received power measurement unit 103 measures received power for the neighbor cell.
(4) The number of measurement points may be changed according to a timing for performing transmission power setting. For example, when starting up the small base station apparatus 100 (when the power is turned ON), the number of measurement points is set to be small, and after the start-up (in operation), all of the assumed measurement points are measured. By the way, during the operation, for example, the transmission power setting is performed at predetermined time intervals. The above-mentioned process is performed since it is necessary to make the small base station apparatus 100 to be in an operation state as quickly as possible when starting up the small base station apparatus 100.
(5) A threshold (example: 100 seconds) of a time period for performing search of neighbor cells may be determined, in which the neighbor cell detection unit 102 may end search at a time point when a time period of the threshold elapses from the time point of start of search, then, perform transmission power setting based on neighbor cells detected at the time point of the end of search. In this case for example, the neighbor cell detection unit 102 includes a timer which sets the time of the threshold. The neighbor cell detection unit 102 starts the timer at the time point of start of search, and ends the search when the timer expires. The time of the threshold may be stored in the storage unit of the small base station apparatus 100 beforehand, or may be obtained from the outside (example: core network).

When the neighbor cell detection unit 102 detects a neighbor cell, the neighbor cell detection unit 102 obtains a bandwidth and the like used in the neighbor cell by broadcast information (MIB and the like) and the like received from the neighbor cell. By the way, as to 3G, a fixed bandwidth (5MHz) may be used.

### [Step 102: received power measurement]

Next, the received power measurement unit 103 measures a received power for each neighbor cell detected in step 101. Although there is no particular limitation for the measurement method of the received power, for example, the received power can be calculated by calculating an average value over the whole band of received power of reference signals (reference signal, pilot signal) transmitted over the whole system band.

### [Step 103: Interference wave arrival direction estimation]

Next, the interference wave arrival direction estimation unit 104 estimates arrival direction of interference wave for each neighbor cell based on a reference signal and the like for each neighbor cell received by the radio reception unit 101. In the present embodiment, since comparison between the before-mentioned desired area direction and the interference wave arrival direction is performed, data represented by a representation method the same as that of the desired area direction data is obtained as data of the interference wave arrival direction. That is, as the data of the interference wave arrival direction, an angle of a predetermined rotation direction with respect to a predetermined reference direction is obtained.

The interference wave arrival direction estimation unit 104 may perform estimation of the arrival direction of the interference wave by using position information of a neighbor base station that forms a neighbor cell, other than performing estimation by using a signal received by the radio reception unit 101. The position information may be obtained, for example, from the core network, or may be obtained by inter-base station communication with a neighbor base station. In a case where the interference wave arrival direction is estimated using position information of a neighbor base station, it is desirable that there is position relationship in which the neighbor base station is visible from the small base station apparatus 100.

### [Step 104: transmission power determination, setting]

Next, the transmission power determination unit 106 determines transmission power of itself (the small base station apparatus 100) based on the received power for each neighbor cell calculated in step 102, the interference wave arrival direction for each neighbor cell estimated in step 103, and the desired area direction.

The transmission power determination unit 104 weights received power of each neighbor cell according to the interference wave arrival direction, obtains a sum of weighted received powers for each band part of a band which overlaps with a target cell band, and regards the largest value in the sums to be an interference power (interference amount) of the target cell.

For example, in a neighbor cell environment as described in Figs. 2 and 3, when weights are set as 1/X, 1/Y and 1/Z, three kinds of values of α/X+β/Y+γ/Z, α/X+β/Y and β/Y are calculated. In these values, since α/X+β/Y+γ/Z is the largest, this is regarded as the interference power. Examples of weighting methods are described later.

In the case of the neighbor cell environment as described in Figs. 2 and 3, the above-mentioned "band part" is each of divided band 1, divided band 2 and divided band 3. That is, the transmission power determination unit 106 calculates, for each of band parts (divided band 1, divided band 2 and divided band 3) that overlaps with transmission band of the small base station apparatus 100 in transmission band of each frequency cell, a sum of weighted received powers of neighbor cells having transmission band including the band part, obtains an interference amount in the target cell based on the sum of the weighted received powers, and determines the transmission power based on the interference amount. The above-mentioned "weighted received power of a neighbor cell having transmission band including the band part" is α/X and β/Y when the band part is the divided band 2, for example.

It is desirable that the size of the width of "band part", that is, a unit of band division is the same as or less than the smallest bandwidth in bandwidths of neighbor cells.

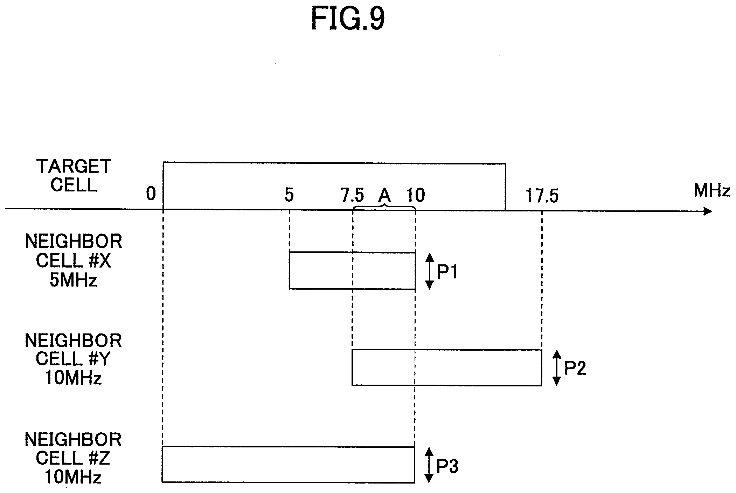

Also, for example, it is assumed that bands of neighbor cells are detected as shown in Fig. 9 and that received powers of the neighbor cells are P1, P2 and P3 respectively as shown in the figure. In Fig. 9, in the frequency axis, the left end of band of the target cell is 0, and frequency positions of ends of bands of each neighbor cell are shown. In the example shown in Fig. 9, the band part shown as A is the largest, and if weights are set as 1/X, 1/Y and 1/Z, the power becomes P1/X+P2/Y+P3/Z, and this value is regarded as an interference power.

The transmission power determination unit 106 determines a transmission power by adding an offset value to the interference power obtained as mentioned above. Then, the transmission power setting unit 107 sets the transmission power determined by the transmission power determination unit 106 to the radio transmission unit 108.

Like this example, in a case where an end of a band of a neighbor cell is placed within (example: in a center of) a band of another neighbor cell, it is preferable that the size of the width of "band part" is less than the smallest bandwidth in bandwidths of neighbor cells. In the example of Fig. 9, it is preferable that the size of the width of "band part" is a half (2.5MHz) of the smallest bandwidth in bandwidths of neighbor cells.

### <On weighting method>

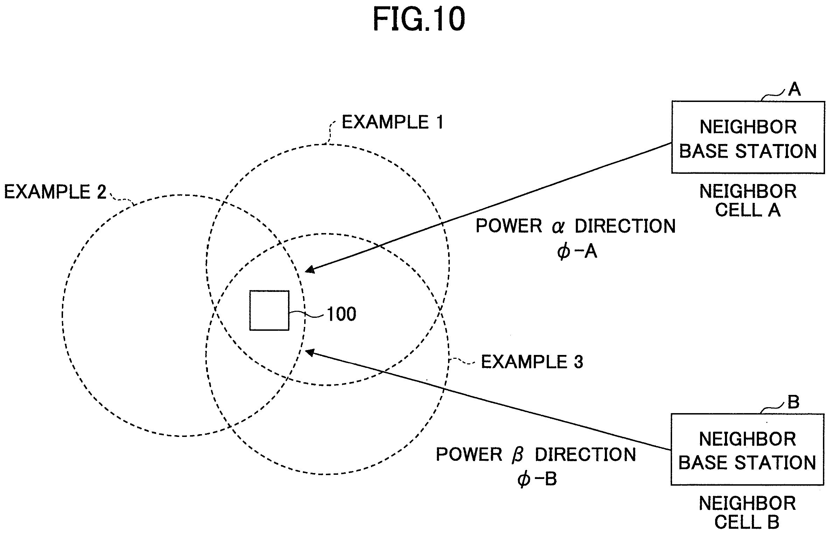

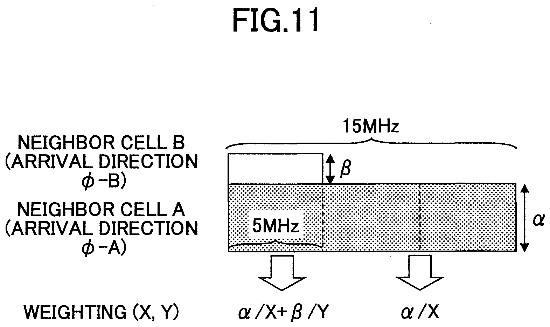

In the following, an example of weighting based on interference wave arrival direction is described. Here, as an example, as shown in Fig. 10, a situation is assumed in which there are a neighbor base station A (neighbor cell A) whose operating bandwidth is 15MHz, a neighbor base station B (neighbor cell B) whose operating bandwidth is 5MHz, and the small base station apparatus 100. Also, as shown in Fig. 11, interference power from the neighbor cell A measured by the small base station apparatus 100 is α, interference power from the neighbor cell B is β, and α>β holds true. Further, an interference wave arrival direction of the neighbor cell A estimated by the small base station apparatus 100 is Φ-A, and an interference wave arrival direction of the neighbor cell B is Φ-B. Also, the desired area direction is represented as Φ-D, and an interference wave arrival direction is generally represented as Φ-I.

In the present embodiment, the transmission power determination unit 106 determines a weight according to an angle (angle from 0 degree to 180 degree) formed between the interference wave arrival direction Φ-I and the desired area direction Φ-D.

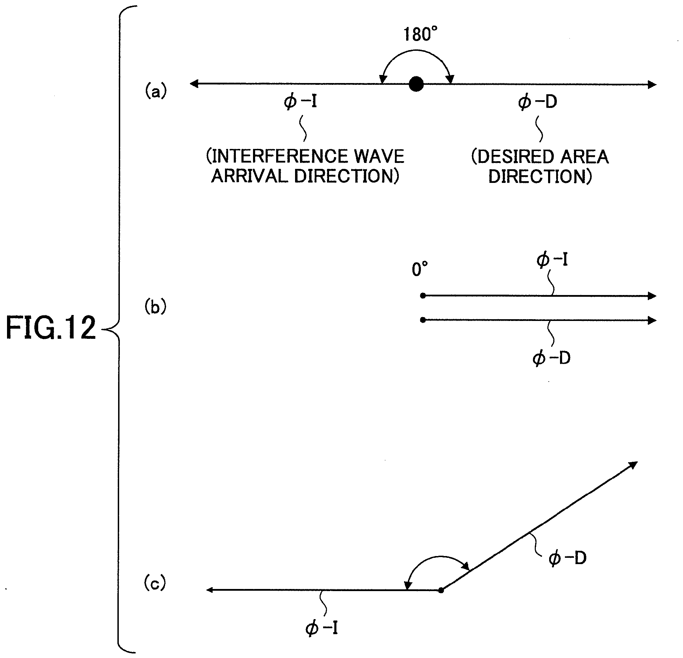

For example, as shown in Fig. 12(a), in a case where the angle between the interference wave arrival direction Φ-I and the desired area direction Φ-D is 180 degree, it means that the desired area direction Φ-D directs toward a direction of an arrival source of the interference wave. Thus, the weight for the interference power corresponding to the cell of the interference wave is set to be the largest (1 in the present embodiment). The weight in this case corresponds to a weight for the interference power α in the case where the desired area direction is toward the neighbor base station A as shown as example 1 shown in Fig. 10.

Also, for example, as shown in Fig. 12(b), in a case where the angle between the interference wave arrival direction Φ-I and the desired area direction Φ-D is 0 degree, it means that the desired area direction Φ-D directs toward a reverse direction of an arrival source of the interference wave. Thus, the weight for the interference power corresponding to the cell of the interference wave is set to be small. That is, when the weight is represented as 1/X, X is set to be greater than 1. The weight of this case corresponds to a weight for the interference power α in the case where the desired area is an opposite side of the neighbor base station A as shown as example 2 shown in Fig. 10.

Also, for example, as shown in Fig. 12(c), in a case where the angle between the interference wave arrival direction Φ-I and the desired area direction Φ-D is an angle that is greater than 90 degree to some extent, it means that the desired area direction Φ-D is different from a direction of an arrival source of the interference wave. Thus, the weight for the interference power corresponding to the cell of the interference wave is set to be small. That is, when the weight is represented as 1/X, X is set to be greater than 1. The weight of this case corresponds to a weight for the interference power β in the case where the desired area is the side of the neighbor base station A as shown as example 1 shown in Fig. 10.

The size of the weight may be set to be the largest value 1 when the angle is 180 degree as shown in Fig. 12(a), for example, and set to be the smaller as the angle becomes smaller. Or the size of the weight may be set by other methods. In any way, the weight is set to be large for an interference wave of an arrival direction by which interference power is assumed to become relatively large for the desired area, and the weight is set to be small for an interference wave of an arrival direction by which interference power is assumed to become relatively small for the desired area.

As an example, interference powers for each desired area direction of example 1, example 2 and example 3 shown in Fig. 10 become as follows respectively, when weights for α and β are set as 1/X and 1/Y.
Example 1: (forming area in the neighbor base station A side): α/X+β/Y, X=1, Y>1
Example 2: (forming area in an opposite side of the neighbor base station A side): α/X+β/Y, X>1, Y>1
Example 3: (forming area in the neighbor base station B side): α/X+β/Y, X>1, Y=1

### <Other example>

In the above-mentioned examples, the operating band is divided, and the sum of weighted interference powers is obtained for each divided band. However, according to situations, a transmission power may be obtained without calculating a plurality of sums considering the divided bands. For example, in an environment shown in Fig. 10, in a case where operating bands of each neighbor base station are the same and this fact is known beforehand, the transmission power determination unit 106 may determine weights after obtaining interference power of each neighbor cell α, β, and interference wave arrival directions, and determine the transmission power by regarding α/X+β/Y to be the interference amount. Also, even when operating bands of each neighbor base station are different, in a case where it is known beforehand that a value of interference power of a band part where bands of all neighbor cells overlap becomes the largest as shown in Figs. 3, 11 and the like, only α/X+β/Y+γ/Z (in the case of Fig. 3) may be calculated, so that transmission power may be determined by regarding the value to be the interference amount.

### (Summary of embodiment)

According to the present embodiment, there is provided a radio base station apparatus including a function for determining a transmission power, including:
a neighbor cell detection unit configured to detect a neighbor cell that interferes with a target cell that the radio base station apparatus can form;
a received power measurement unit configured to measure a received power from the neighbor cell;
an interference wave arrival direction estimation unit configured to estimate an arrival direction of interference wave from the neighbor cell; and
a transmission power determination unit configured to weight the received power based on the arrival direction of the interference wave and a desired area direction, to determine an interference amount in the target cell based on a sum of weighted received powers, and to determine a transmission power using the interference amount.

As described above, by weighting the received power based on the arrival direction of the interference wave and a desired area direction, determining an interference amount in the target cell based on a sum of weighted received powers so as to determine a transmission power using the interference amount, an area can be formed to a desired area direction, and interference to a neighbor cell can be reduced. Also, since large transmission power is not set uselessly, it can be realized to reduce power consumption of the apparatus by reducing transmission power. In addition, in a case where radio base station apparatuses each of which automatically sets transmission power based on received power of interference wave are placed adjacently, one radio base station apparatus sets a weight for interference wave from the other radio base station apparatus to be small, so that it becomes possible to avoid operation in which both of the radio base station apparatuses continue to increase transmission power.

The transmission power determination unit is configured to calculate, for each band part that overlaps with a transmission band of the radio base station apparatus in transmission bands of each neighbor cell detected by the neighbor cell detection unit, a sum of weighted received powers for neighbor cells having transmission bands each including the band part, determine the interference amount in the target cell based on the sum of weighted received powers so as to determine the transmission power by using the interference amount.

Also, for example, the transmission power determination unit regards a largest value in sums of weighted received powers calculated for each band part to be the interference amount in the target cell, and determines the transmission power by using the interference amount.

As described above, by calculating a sum of weighted received powers for each band part that overlaps with a transmission band of the radio base station apparatus in transmission bands of each neighbor cell, and regarding a largest value in sums to be the interference amount in the target cell to determine the transmission power by using the interference amount, even when a neighbor cell that uses a bandwidth smaller than the operating bandwidth of the radio base station apparatus becomes interference, for example, transmission power in which interference from the neighbor cell is properly considered can be set.

The transmission power determination unit determines, for example, a weight for the received power based on an angle between the arrival direction of the interference wave and the desired area direction. Accordingly, a proper weight can be set.

In the above, each embodiment of the present invention has been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary.
Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the small base station apparatus 100 has been explained by using a functional block diagram. However, each apparatus may be implemented in hardware, software, or a combination thereof. The software that operates according to the present invention, that is, the software executed by a processor provided in the small base station apparatus 100 may be stored in any proper storage medium such as a RAM (Random Access Memory), a flash memory, a ROM (Read Only Memory), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the scope of the present invention.

### DESCRIPTION OF REFERENCE SIGNS

100 small base station apparatus
   1, 2, 3 macro base station apparatus
101 radio reception unit
102 neighbor cell detection unit
103 received power measurement unit
104 interference wave arrival direction estimation unit
105 desired area direction data storage unit
106 transmission power determination unit
107 transmission power setting unit
108 radio transmission unit

## Claims

1. A radio base station apparatus (100) including a function for determining a transmission power, comprising:
a neighbor cell detection unit (102) configured to detect a neighbor cell (#1, #2, #3) that interferes with a target cell that the radio base station apparatus (100) can form;
a received power measurement unit (103) configured to measure a received power from the neighbor cell (#1, #2, #3) ;
an interference wave arrival direction estimation unit (104) configured to estimate an arrival direction of interference wave from the neighbor cell (#1, #2, #3); and
a transmission power determination unit (106) configured to weight the received power based on the arrival direction of the interference wave and a desired area direction, to determine an interference amount in the target cell based on a sum of weighted received powers, and to determine a transmission power using the interference amount.

2. The radio base station apparatus (100) as claimed in claim 1, wherein the transmission power determination unit (106) calculates, for each band part that overlaps with a transmission band of the radio base station apparatus (100) in transmission bands of each neighbor cell (#1, #2, #3) detected by the neighbor cell detection unit (102), a sum of weighted received powers for neighbor cells (#1, #2, #3) having transmission bands each including the band part, determines the interference amount in the target cell based on the sum of weighted received powers so as to determine the transmission power by using the interference amount.

3. The radio base station apparatus (100) as claimed in claim 2, wherein the transmission power determination unit (106) regards the largest value in sums of weighted received powers calculated for each band part to be the interference amount in the target cell, and determines the transmission power by using the interference amount.

4. The radio base station apparatus (100) as claimed in any one of claims 1-3, wherein the transmission power determination unit (106) determines a weight for the received power based on an angle between the arrival direction of the interference wave and the desired area direction.

5. The radio base station apparatus (100) as claimed in any one of claims 1-4, wherein, when detecting the neighbor cell (#1, #2, #3), the neighbor cell detection unit (102) searches a smaller number of measurement points than the number of measurement points where a center of a band of a neighbor cell (#1, #2, #3) may exist.

6. A transmission power determination method executed by a radio base station apparatus (100) including a function for determining a transmission power, comprising:
a neighbor cell detection step of detecting a neighbor cell (#1, #2, #3) that interferes with a target cell that the radio base station apparatus (100) can form;
a received power measurement step of measuring a received power from the neighbor cell (#1, #2, #3);
an interference wave arrival direction estimation step of estimating an arrival direction of interference wave from the neighbor cell (#1, #2, #3); and a transmission power determination step of weighting the received power based on the arrival direction of the interference wave and a desired area direction, determining an interference amount in the target cell based on a sum of weighted received powers, and determining a transmission power using the interference amount.

7. The transmission power determination method as claimed in claim 6, wherein, in the transmission power determination step, the radio base station apparatus (100) calculates, for each band part that overlaps with a transmission band of the radio base station apparatus (100) in transmission bands of each neighbor cell (#1, #2, #3) detected by the neighbor cell detection step, a sum of weighted received powers for neighbor cells (#1, #2, #3) having transmission bands each including the band part, determines the interference amount in the target cell based on the sum of weighted received powers so as to determine the transmission power by using the interference amount.

8. The transmission power determination method as claimed in claim 7, wherein, in the transmission power determination step, the radio base station apparatus (100) regards the largest value in sums of weighted received powers calculated for each band part to be the interference amount in the target cell, and determines the transmission power by using the interference amount.

9. The transmission power determination method as claimed in any one of claims 6-8, wherein, in the transmission power determination step, the radio base station apparatus (100) determines a weight for the received power based on an angle between the arrival direction of the interference wave and the desired area direction.

10. The transmission power determination method as claimed in any one of claims 6-9, wherein, in the neighbor cell (#1, #2, #3) detection step, when detecting the neighbor cell (#1, #2, #3), the radio base station apparatus (100) searches a smaller number of measurement points than the number of measurement points where a center of a band of a neighbor cell (#1, #2, #3) may exist.

## Patentansprüche

1. Funkbasisstationsvorrichtung (100) einschließlich einer Funktion zum Bestimmen einer Übertragungsleistung, umfassend:
eine Nachbarzellenerkennungseinheit (102), die dazu ausgebildet ist, eine Nachbarzelle (#1, #2, #3) zu erkennen, die eine Zielzelle, die die Funkbasisstationsvorrichtung (100) bilden kann, beeinträchtigt;
eine Empfangene-Leistung-Messeinheit (103), die dazu ausgebildet ist, eine empfangene Leistung von der Nachbarzelle (#1, #2, #3) zu messen;
eine Störwellenankunftsrichtungsschätzeinheit (104), die dazu ausgebildet ist, eine Ankunftsrichtung einer Störwelle von der Nachbarzelle (#1, #2, #3) zu schätzen; und
eine Übertragungsleistungsbestimmungseinheit (106), die dazu ausgebildet ist, die empfangene Leistung basierend auf der Ankunftsrichtung der Störwelle und einer Erwünschtes-Gebiet-Richtung zu gewichten, um basierend auf einer Summe aus gewichteten empfangenen Leistungen einen Störbetrag in der Zielzelle zu bestimmen und um unter Verwendung des Störbetrags eine Übertragungsleistung zu bestimmen.

2. Funkbasisstationsvorrichtung (100) wie in Anspruch 1 beansprucht, wobei die Übertragungsleistungsbestimmungseinheit (106) für jeden Bandteil, der sich mit einem Übertragungsband der Funkbasisstationsvorrichtung (100) in Übertragungsbändern jeder Nachbarzelle (#1, #2, #3), die durch die Nachbarzellenerkennungseinheit (102) erkannt wurde, überlappt, eine Summe aus gewichteten empfangenen Leistungen für Nachbarzellen (#1, #2, #3), die Übertragungsbänder aufweisen, von denen jedes den Bandteil umfasst, berechnet, den Störbetrag in der Zielzelle basierend auf der Summe aus gewichteten empfangenen Leistungen bestimmt, um unter Verwendung des Störbetrags die Übertragungsleistung zu bestimmen.

3. Funkbasisstationsvorrichtung (100) wie in Anspruch 2 beansprucht, wobei die Übertragungsleistungsbestimmungseinheit (106) in Summen aus gewichteten empfangenen Leistungen, die für jeden Bandteil als der Störbetrag in der Zielzelle berechnet wurden, den größten Wert berücksichtigt und unter Verwendung des Störbetrags die Übertragungsleistung bestimmt.

4. Funkbasisstationsvorrichtung (100) wie in einem der Ansprüche 1 bis 3 beansprucht, wobei die Übertragungsleistungsbestimmungseinheit (106) ein Gewicht für die empfangene Leistung basierend auf einem Winkel zwischen der Ankunftsrichtung der Störwelle und der Erwünschtes-Gebiet-Richtung bestimmt.

5. Funkbasisstationsvorrichtung (100) wie in einem der Ansprüche 1 bis 4 beansprucht, wobei die Nachbarzellenerkennungseinheit (102), wenn sie die Nachbarzelle (#1, #2, #3) erkennt, eine kleinere Anzahl von Messpunkten als die Anzahl von Messpunkten, bei denen ein Zentrum eines Bandes einer Nachbarzelle (#1, #2, #3) existieren kann, sucht.

6. Übertragungsleistungsbestimmungsverfahren, ausgeführt von einer Funkbasisstationsvorrichtung (100) einschließlich einer Funktion zum Bestimmen einer Übertragungsleistung, umfassend:
einen Nachbarzellenerkennungsschritt eines Erkennens einer Nachbarzelle (#1, #2, #3), die eine Zielzelle, die die Funkbasisstationsvorrichtung (100) bilden kann, beeinträchtigt;
einen Empfangene-Leistung-Messschritt eines Messens einer empfangenen Leistung von der Nachbarzelle (#1, #2, #3);
einen Störwellenankunftsrichtungsschätzschritt eines Schätzens einer Ankunftsrichtung einer Störwelle von der Nachbarzelle (#1, #2, #3); und
einen Übertragungsleistungsbestimmungsschritt eines Gewichtens der empfangenen Leistung basierend auf der Ankunftsrichtung der Störwelle und einer Erwünschtes-Gebiet-Richtung, eines Bestimmens eines Störbetrags in der Zielzelle basierend auf einer Summe aus gewichteten empfangenen Leistungen und eines Bestimmens einer Übertragungsleistung unter Verwendung des Störbetrags.

7. Übertragungsleistungsbestimmungsverfahren wie in Anspruch 6 beansprucht, wobei die Funkbasisstationsvorrichtung (100) in dem Übertragungsleistungsbestimmungsschritt für jeden Bandteil, der sich mit einem Übertragungsband der Funkbasisstationsvorrichtung (100) in Übertragungsbändern jeder Nachbarzelle (#1, #2, #3), die durch den Nachbarzellenerkennungsschritt erkannt wurde, überlappt, eine Summe aus gewichteten empfangenen Leistungen für Nachbarzellen (#1, #2, #3), die Übertragungsbänder aufweisen, von denen jedes den Bandteil umfasst, berechnet, den Störbetrag in der Zielzelle basierend auf der Summe aus gewichteten empfangenen Leistungen bestimmt, um unter Verwendung des Störbetrags die Übertragungsleistung zu bestimmen.

8. Übertragungsleistungsbestimmungsverfahren wie in Anspruch 7 beansprucht, wobei die Funkbasisstationsvorrichtung (100) in dem Übertragungsleistungsbestimmungsschritt in Summen aus gewichteten empfangenen Leistungen, die für jeden Bandteil als der Störbetrag in der Zielzelle berechnet wurden, den größten Wert berücksichtigt und unter Verwendung des Störbetrags die Übertragungsleistung bestimmt.

9. Übertragungsleistungsbestimmungsverfahren wie in einem der Ansprüche 6 bis 8 beansprucht, wobei die Funkbasisstationsvorrichtung (100) in dem Übertragungsleistungsbestimmungsschritt ein Gewicht für die empfangene Leistung basierend auf einem Winkel zwischen der Ankunftsrichtung der Störwelle und der Erwünschtes-Gebiet-Richtung bestimmt.

10. Übertragungsleistungsbestimmungsverfahren wie in einem der Ansprüche 6 bis 9 beansprucht, wobei die Funkbasisstationsvorrichtung (100) in dem Nachbarzellen(#1, #2, #3)-Erkennungsschritt, wenn sie die Nachbarzelle (#1, #2, #3) erkennt, eine kleinere Anzahl von Messpunkten als die Anzahl von Messpunkten, bei denen ein Zentrum eines Bandes einer Nachbarzelle (#1, #2, #3) existieren kann, sucht.

## Revendications

1. Appareil formant station de base radio (100) incluant une fonction pour déterminer une puissance d'émission, comprenant :
une unité de détection de cellule voisine (102) configurée pour détecter une cellule voisine (#1, #2, #3) qui interfère avec une cellule cible que l'appareil formant station de base radio (100) peut former; une unité de mesure de puissance reçue (103) configurée pour mesurer une puissance reçue en provenance de la cellule voisine (#1, #2, #3);
une unité d'évaluation de direction d'arrivée d'onde d'interférence (104) configurée pour évaluer une direction d'arrivée d'onde d'interférence en provenance de la cellule voisine (#1, #2, #3); et une unité de détermination de puissance d'émission (106) configurée pour pondérer la puissance reçue sur la base de la direction d'arrivée de l'onde d'interférence et d'une direction de zone souhaitée, pour déterminer une quantité d'interférence dans la cellule cible sur la base d'une somme de puissances reçues pondérées, et pour déterminer une puissance d'émission en utilisant la quantité d'interférence.

2. Appareil formant station de base radio (100) selon la revendication 1, dans lequel l'unité de détermination de puissance d'émission (106) calcule, pour chaque partie de bande qui chevauche une bande d'émission de l'appareil formant station de base radio (100) dans des bandes d'émission de chaque cellule voisine (#1, #2, #3) détectée par l'unité de détection de cellule voisine (102), une somme de puissances reçues pondérées pour des cellules voisines (#1, #2, #3) ayant des bandes d'émission incluant chacune la partie de bande, et détermine la quantité d'interférence dans la cellule cible sur la base de la somme de puissances reçues pondérées afin de déterminer la puissance d'émission en utilisant la quantité d'interférence.

3. Appareil formant station de base radio (100) selon la revendication 2, dans lequel l'unité de détermination de puissance d'émission (106) considère la plus grande valeur dans des sommes de puissances reçues pondérées calculées pour chaque partie de bande comme étant la quantité d'interférence dans la cellule cible, et détermine la puissance d'émission en utilisant la quantité d'interférence.

4. Appareil formant station de base radio (100) selon l'une quelconque des revendications 1 à 3, dans lequel l'unité de détermination de puissance d'émission (106) détermine une pondération pour la puissance reçue sur la base d'un angle entre la direction d'arrivée de l'onde d'interférence et la direction de zone souhaitée.

5. Appareil formant station de base radio (100) selon l'une quelconque des revendications 1 à 4, dans lequel, en détectant la cellule voisine (#1, #2, #3), l'unité de détection de cellule voisine (102) recherche un nombre de points de mesure plus petit que le nombre de points de mesure où un centre d'une bande d'une cellule voisine (#1, #2, #3) peut exister.

6. Procédé de détermination de puissance d'émission exécuté par un appareil formant station de base radio (100) incluant une fonction pour déterminer une puissance d'émission, comprenant :
une étape de détection de cellule voisine consistant à détecter une cellule voisine (#1, #2, #3) qui interfère avec une cellule cible que l'appareil formant station de base radio (100) peut former;
une étape de mesure de puissance reçue consistant à mesurer une puissance reçue en provenance de la cellule voisine (#1, #2, #3) ;
une étape d'évaluation de direction d'arrivée d'onde d'interférence consistant à évaluer une direction d'arrivée d'onde d'interférence en provenance de la cellule voisine (#1, #2, #3); et une étape de détermination de puissance d'émission consistant à pondérer la puissance reçue sur la base de la direction d'arrivée de l'onde d'interférence et d'une direction de zone souhaitée, à déterminer une quantité d'interférence dans la cellule cible sur la base d'une somme de puissances reçues pondérées, et à déterminer une puissance d'émission en utilisant la quantité d'interférence.

7. Procédé de détermination de puissance d'émission selon la revendication 6, dans lequel, dans l'étape de détermination de puissance d'émission, l'appareil formant station de base radio (100) calcule, pour chaque partie de bande qui chevauche une bande d'émission de l'appareil formant station de base radio (100) dans des bandes d'émission de chaque cellule voisine (#1, #2, #3) détectée par l'étape de détection de cellule voisine, une somme de puissances reçues pondérées pour des cellules voisines (#1, #2, #3) ayant des bandes d'émission incluant chacune la partie de bande, détermine la quantité d'interférence dans la cellule cible sur la base de la somme de puissances reçues pondérées afin de déterminer la puissance d'émission en utilisant la quantité d'interférence.

8. Procédé de détermination de puissance d'émission selon la revendication 7, dans lequel, dans l'étape de détermination de puissance d'émission, l'appareil formant station de base radio (100) considère la plus grande valeur dans des sommes de puissances reçues pondérées calculées pour chaque partie de bande comme étant la quantité d'interférence dans la cellule cible, et détermine la puissance d'émission en utilisant la quantité d'interférence.

9. Procédé de détermination de puissance d'émission selon l'une quelconque des revendications 6 à 8, dans lequel, dans l'étape de détermination de puissance d'émission, l'appareil formant station de base radio (100) détermine une pondération pour la puissance reçue sur la base d'un angle entre la direction d'arrivée de l'onde d'interférence et la direction de zone souhaitée.

10. Procédé de détermination de puissance d'émission selon l'une quelconque des revendications 6 à 9, dans lequel, dans l'étape de détection de cellule voisine (#1, #2, #3), en détectant la cellule voisine (#1, #2, #3), l'appareil formant station de base radio (100) recherche un nombre de points de mesure plus petit que le nombre de points de mesure où un centre d'une bande d'une cellule voisine (#1, #2, #3) peut exister.
